# EUROPEAN PATENT SPECIFICATION

(11) **EP 0 801 830 B1**
(45) Date of publication and mention of the grant of the patent: **12.01.2000**
(21) Application number: 95934930.9
(22) Date of filing: 09.10.1995
(51) Int. Cl.: H02G 3/08

(54) **INSERTION FRAME**
EINFÜHRUNGSRAHMEN
CHASSIS A EMBOITEMENT

(30) Priority: 10.10.1994 SE 9403464
(43) Date of publication of application: 22.10.1997
(73) Proprietor: THORSMAN & CO AB, S-611 29 Nyköping (SE)
(72) Inventor: ERIKSSON, Staffan, S-610 55 Stigtomta (SE); BOTVIDSSON, Lars, S-610 54 Nävekvarn (SE)
(74) Representative: Johansson, Lars-Erik
(86) International application number: SE9501164
(87) International publication number: WO9611518

(56) References cited:
- WO-A-90/09692
- FR-A- 2 698 738

## Description

### TECHNICAL FIELD

The present invention relates to an insertion frame for mounting in the front opening of a trunking section, or the like, of the type having a front which on both sides of the front opening comprises mutually facing flanges or parts of the trunking section.

### PRIOR ART

Horizontal trunking systems are used to an increasing extent at installations of electrical- and telecommunication cables as well as data communication cables in offices, laboratories and workshops. The trunking sections could be provided with compartments in order to separate power cables, telecommunication- and data cables from each other. The trunking sections are not only used for cables. Together with the cables different types of sockets, control means and similar are mounted in the trunking sections designed as insertions for conduit boxes which conduit boxes preferably are arranged in such a way that their openings are flush with the front of the trunking section. Usually the conduit boxes are fixed to the bottom of the trunking section which as the depth and bottom design of the trunking section vary has led to the design of a number of different fastening means and types of conduit boxes.

In addition to trunking sections of the horizontal type, mounted as window boards, vertical trunking sections fixed to the walls or free standing, so called poles, and in certain applications floor outlet boxes, i.e. socket units integrated in the floor covered by a protecting cover, are also used today. All these different trunking sections, outlet boxes, etc. could be considered as electrical "service-providers" as they provide and distribute an "electrical service" to the user. The "service" could for instance be a certain electrical socket, a switch or the like.

Electrical outlet boxes for mounting on the flanges of the opening of a trunking section instead of to its bottom, otherwise having the same functions, are previously known. The European patent EP-B-0473589 (see also WO-A-90 09692) discloses such a box for snap-in mounting and screw fastening in the opening of a trunking section. This box also has a body comprising two parts, the first or lower one comprises the bottom of the box and the portion of the side walls which are intended to be placed inside the trunking section. In this portion of the walls hole notches or fracturable parts for the insertion of electrical cables in the outlet box are arranged. The lower part which contributes to the locking of the outlet box in the longitudinal direction of the trunking section is fixed against the upper part by means of screws.

Common to these prior solutions to the problem of arranging outlets, etc. on a service-provider is that an interface has been created on the front of the service-provider which has made it possible to arrange standardised outlets, control means, etc. usually having the same design as for wall mounting.

The disadvantages of these prior solutions are among other things that they require unnecessary large space inside the service-provider and that they according to the following require an unnecessary large number of parts to implement the desired function or service.

The document FR-A-2698738 shows a mounting frame to be fixed in a front opening of a cable channel. The frame is intended for mounting a desired functional unit on or in the cable channel. In order to enable the use of the frame in cable channels having different widths of the opening the frame is rectangular in shape.

### DISCLOSURE OF THE INVENTION

One object of the present invention is to provide an insertion- or mounting-frame for fastening in the front opening of a trunking section on which frame a desired function like e.g. an outlet, a control means or the like could be built which frame allows a reduction of the number of necessary parts to implement the respective function, allows the frame to be used with service-providers having either horizontal or vertical front openings, gives more flexibility when used in floor mounted outlet boxes and allows optimal bending radius for connected cables, especially when mounting the same in vertical trunking sections.

This and additional objects are achieved according to the invention by means of an insertion frame comprising the characteristics according to the following patent claims.

### BRIEF DESCRIPTION OF THE DRAWINGS

Further objects and advantages will be apparent from the following description of an embodiment of the invention. The description will be referring to the drawing on which
figure 1 shows in a perspective view an insertion frame according to the invention arranged for snap-in mounting in the front opening of a service-provider, e.g. a trunking section,
figure 2 shows in section an example of a trunking section,
figure 3 and 4 shows in section two further examples of a trunking section on which the insertion frame according to the invention could be applied,
figure 5 shows in a perspective view an insertion frame according to the invention together with a few additional devices for implementing an outlet from the trunking section,
figure 6 shows in a perspective view the arrangement of a connector holder plate in a position having a certain angle in relation to the frame together with a cover for this arrangement,
figure 7 shows in a perspective view the arrangement of a connector holder plate in the plane of the frame together with a cover for this arrangement.

### PREFERRED EMBODIMENT

An embodiment will be described in the following according to which the insertion frame is mounted on a trunking section. As mentioned above it is however a characteristic feature of the insertion frame that it could be used with other service-providers as well, e.g. in floor mounted outlet boxes. Thus, the following description refers to a non-limiting example.

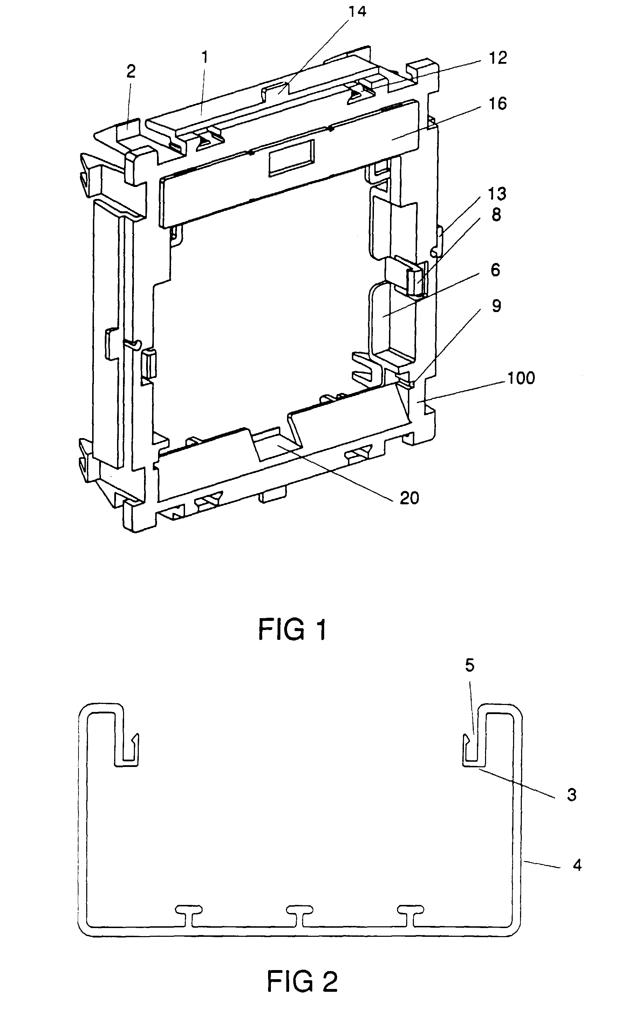

In figure 1 is shown an insertion frame 100 according to the invention arranged for snap-in mounting in the front opening of a trunking section of the type illustrated in the figures 2 to 4. In order to make it possible to mount the frame, keeping the vertical direction in vertical as well as horizontal trunking sections having the same standard width in the opening, it has been given a square form and is in the shown example symmetric around a central vertical plane. Both pairs of parallel sides are provided with snap-in arrangements comprising a guiding and spacing means 1 and a co-operating hook 2 at each endportion of a side. Thus, in the shown example the frame is provided with four guiding and spacing means 1 and eight hooks 2. The guiding and spacing means contribute to the guiding of the frame in the front of the trunking section and also give the correct position for the front of the mounted frame flush with the front of the trunking section. The guiding and spacing means do not, however, have to extend along the entire length of the side and one hook per side could be enough in certain applications. The hooks are arranged to grip under the flange 3 when the frame is mounted in the trunking section 4. At the same time the guiding and spacing means reaches down into the groove 5 in the trunking section which gives a stable fixing with high friction for longitudinal sliding in the section. Thus, in each of the two alternatives for the assembly only one pair of guiding and spacing means and two pairs of hooks are engaging. Therefore, it could be advantageous if at least portions of the guiding and spacing means are arranged fracturable as will be described below.

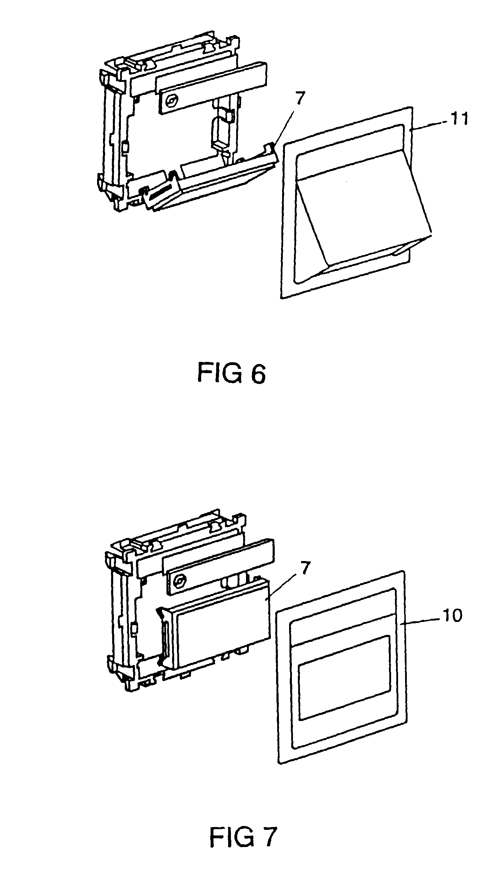

The frame is designed in such a way that it is possible to assembly directly on the same a number of different functions. To this end it is provided with a first support for a snap-in connector holder plate 7 in the form of a seat 6 and a pair of locking hooks 8, cf. figure 5, and a second support for a connector holder plate in the form of a pair of grooves 9. The two ways of mounting the plates 7 could be used alternatively or in combination as will be shown below.

Additionally the frame is provided with support means 12 for a cover 10, 11, cf. figure 5, in the form of four suitably designed grooves at the edge of the frame which co-operate with complementary support means (not shown) arranged on the cover. As an alternative or complement the cover could be fastened with two screws in holes 13 arranged at the edge of the frame.

Further, each of the edges of the frame is provided with one or several fracturable spacing means 14 which give correct spacing in the opening of the section to a possibly adjacent frame or other insertion unit in the opening. These spacing means could be so designed that when the frame is pressed into the opening of the section these means are automatically broken or bent aside on those sides of the frame where they are not used, i.e. on those sides which will bear against the flange of the opening of the section.

The outlet according to the invention could be marked by means of a label arranged directly on the frame. Normally the cover 10, 11 is marked which could be a disadvantage at maintenance or mounting of several adjacent outlets. Since several covers at the same time are removed the covers could possibly inadvertently be mixed up when remounted and consequently thereafter incorrectly indicate the outlets. If instead the frame mounted in the front of the section is marked the risk of confusion is avoided. The cover 10, 11 is for this purpose provided with a suitable opening or transparent window 15 opposite the attached label. A label holder could e.g., as shown in figure 5, comprise an elevation 16 in the form of a plate and a transparent snap-mounted window 17 which is mounted on top of the label fixed on the elevation 16.

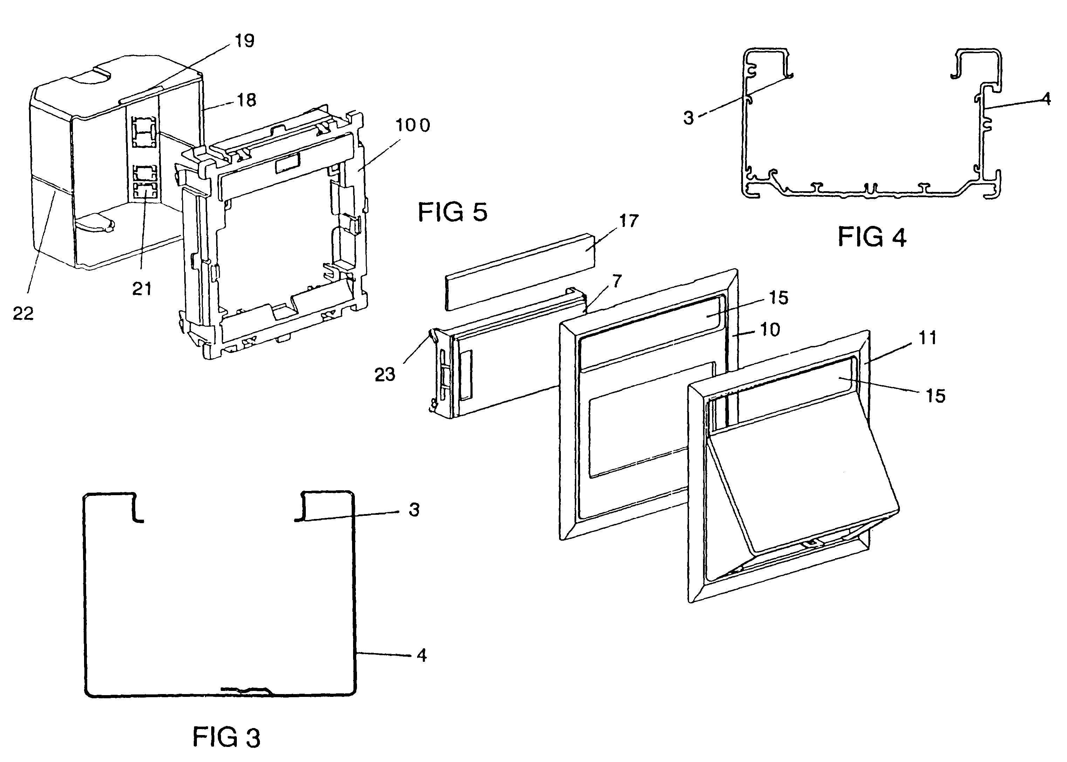

The trunking sections could be made of extruded plastic, figure 2, sheet metal, figure 3 or extruded aluminium, figure 4 depending on the application. When the insertion frame is used in a floor mounted outlet box the parts of the box co-operating with the frame have of course a design similar to what is shown in figures 2 to 4.

One of the disadvantages of prior arrangements of outlets, etc. in trunking sections is, as mentioned above, that they presuppose an outlet box mounted in the trunking section, in and on which the desired function is installed. The outlet box is mostly fixed to the bottom or the rear wall of the section but could also be mounted in the opening of the section, as shown in the European patent EP-B-0473589. In both cases the space for cabling in the section is unnecessary limited. Especially when additional cables, possibly provided with pre-mounted connectors, have to be installed in a section which has already been cabled the outlet boxes already mounted will cause a problem. On one hand the box body inserted in the section could electrically and mechanically protect a sensitive unit during e.g. installation work in the section but on the other hand this protection is not always needed.

In order to achieve greater flexibility the frame according to the invention could, if so desired, be provided with a snap-on mounted lower protection cover 18, shown in figure 5. To this end the frame and the lower protection cover are provided with complementary snap-on locking means 19, 20, as shown in figures 1 and 5. Other locking means are of course possible to imagine.

It should be noted that the lower protection cover has no function in connection with e.g. the fixing of the frame in the opening of the section. In a preferred embodiment the cover is made of non-rigid plastic and is additionally provided with two slots 22 arranged in opposite side walls. The slots and the material of the cover allows the cover to be strongly deformed without damaging the same. The cover could therefore, if so desired, be installed in a trunking section below a previously mounted frame but normally the cover will of course be fixed on the frame before this is inserted into the section. As shown in figure 5 the slot leads to a notch at the bottom part of the cover provided with fracturable parts 21. When the cover is mounted from behind against the frame and e.g. a connector holder plate 7 with connector and cable already has been mounted on the frame the flexible material of the cover allows the cable to be entered through the slot in the direction of the notch provided with the fracturable parts. These parts can now be broken away to provide space for the cable or just be bent aside by means of the cable. In both cases the slot will close again when the cover is fixed against the frame and a very good mechanical and electrical protection is achieved without unnecessary openings in the cover.

In figure 5 is shown how a function or service, in this case a data or low tension outlet, could be assembled on a frame 100 according to the invention for insertion in a trunking section 4. We can e.g. imagine that a preassembled cable has been drawn into the section. Preassembled cable means that the cable has been provided at its endportion with a suitable connector. The frame 100 is snapped into the opening of the section in the position of the outlet. Then the endportion of the cable is inserted from behind through the opening in the frame to the front side where the connector is fixed to a connector holder plate 7 the size and design of which is adapted for co-operation with the frame 100. The connector holder plate exist in a number of different designs when it comes to the hole for the connector. In figure 5 the plate is shown without such a hole for clarity reasons.

Then the connector holder plate is fixed with the connector and associated cable on the frame in one of two possible positions. In a flat mounting, as shown in figure 7, in which the plate is pressed down in the frame towards the seat 6 where it is fixed by a snap-in function by means of the locking hooks 8, or in an inclined position, as shown in figure 6, in which protruding portions 23 on the plate are inserted in the grooves 9 on the frame.

A suitable marking is applied to the frame, as described above, in the form of a label being maintained in position and protected by means of a window 17. Depending on the type of mounting, flat or inclined, which has been used the corresponding cover is then snapped on to the frame.

According to known methods for implementing the corresponding function a special bottom plate is always used on which the function is assembled and which bottom plate is then fixed to a box pre-mounted in the section.

The assembly which is made possible by the frame according to the invention does not need any bottom plate according to what has been described above which makes the assembly easier and less expensive.

From the previous description it is evident that the frame could be fixed in four different ways in the opening of a trunking section by stepwise rotation 90° of the frame. An inclined outlet, e.g. according figure 6, can thus be brought into four different directions which gives maximum flexibility. The same frame could thus be used for horizontal as well as vertical sections whereby the desired direction of the outlet could always be achieved. Especially in floor mounted outlet boxes there could be a reason to fully make use of the possibilities given by this flexibility due to the limited space and a concentration of different types of functions.

As described above there are two different alternatives for mounting the connector holder plate. Normally, one of those alternatives is used but there might exist situations in which it is desired to use the two positions at the same time, i.e. to fix two connector holder plates on the same frame. The arrangement for the two positions on the frame according to the invention has been made in such a way that this is possible.

In certain situations it is not desired that a person, operator or other, should be able to reach the connector as such, at least not unintentionally or by imprudence. This could e.g. be true for connectors for data terminals, laboratory equipment or the like, where disconnection of the equipment could have serious consequences. A solution to this problem which is made possible by means of the frame according to the invention is characterised by the fact that the arrangement of the contact against an external cable is carried out at a connector holder plate which is mounted flat. A further plate having a through hole for the cable and possibly tension relieving means is mounted in the inclined position and a cover of the inclined type is snapped on to the frame.

The transmission speed for data communication is further increasing. This means among other things that the smallest authorised bending radius for the transmission cables also increases. According to the previous description the frame 100 is provided with guiding and spacing means 1 on all four sides. In each mounting alternative these means 1 have, however, their guiding and spacing functions only at the two opposite sides which fix the frame against the opening of the section. At the two additional sides these means protrude into the section and take away space unnecessarily and may moreover influence the bending radius in a detrimental way for a high frequency cable in the trunking section connected to the outlet. For this reason at least parts of these inactive guiding and spacing means 1, protruding into the section, could be arranged as fracturable parts.

## Claims

1. Mounting frame (100) to be fixed in a front opening of an electrical service-provider (4) of the type having a front comprising mutually facing flanges on each side of the opening which frame is intended for mounting a desired functional unit on or in the service-provider **characterised in that** the frame (100) is designed so that it could be fixed in said front opening in at least two positions which differ from each other 90° in rotational direction in the plane of the frame.

2. Mounting frame according to claim 1, **characterised in that** the frame (100) has a square form and that each side of the frame is provided with a snap-in arrangement in the form of a guiding and spacing means (1) and at least one hook (2) co-operating with the flanges of the service-provider.

3. Mounting frame according to any of the claims 1 and 2, **characterised in that** the frame (100) is provided with first fastening means for fixing a connector holder plate (7) on the frame in a position inclined relative to the plane of the frame.

4. Mounting frame according to claim 3, **characterised in that** the frame (100) is additionally provided with second fastening means for fixing a connector holder plate (7) on the frame in a position substantially aligned with the plane of the frame.

5. Mounting frame according to claim 4, **characterised in that** said first and second fastening means are so arranged that two connector holder plates could be mounted on the frame (100) at the same time.

6. Mounting frame according to any of the claims 1 to 5, **characterised in that** the frame (100) is provided with fastening means at its rear side for fixing a co-operating separate mechanical and electrical protection cover.

7. Mounting frame according to any of the claims 1 to 6, **characterised in that** the frame (100) is provided with a holder for a label for indicating the connector arranged on the connector holder plate of the frame.

8. Mounting frame according to any of the claims 1 to 7, **characterised in that** the frame (100) is provided with means for fixing a co-operating cover.

9. Mounting frame according to claim 8, **characterised in that** said cover is provided with an opening or a transparent window opposite said holder for said label.

## Patentansprüche

1. Anbringrahmen (100), der in einer vorderen Öffnung eines elektrischen Dienst-Providers (4), derjenigen Art befestigbar ist, die eine Vorderseite aufweist, die zueinander gerichtete Flansche an jeder Seite der Öffnung aufweist, welcher Rahmen für die Anbringung einer gewünschten Funktionseinheit an oder in dem Dienst-Provider gedacht ist,
dadurch **gekennzeichnet**, daß
der Rahmen (100) eine Quadratform aufweist, und daß jede Seite des Rahmens mit einer Einschnappanordnung in der Form einer Führungs- und Beabstandungseinrichtung (1) und wenigstens eines Hakens (2) versehen ist, der mit den Flanschen des Dienst-Providers zusammenwirkt, so daß er in der vorderen Öffnung in wenigstens zwei Stellungen befestigt werden könnte, die voneinander in einer Drehrichtung in der Ebene des Rahmens um 90° unterschiedlich sind.

2. Anbringrahmen nach Anspruch 1,
dadurch **gekennzeichnet**, daß
der Rahmen (100) mit ersten Befestigungseinrichtungen für die Befestigung einer Verbinderhalteplatte (7) an dem Rahmen in einer Position, die bezüglich der Ebene des Rahmens geneigt ist, versehen ist.

3. Anbringrahmen nach Anspruch 2,
dadurch **gekennzeichnet**, daß
der Rahmen (100) zusätzlich mit zweiten Befestigungseinrichtungen zur Befestigung einer Verbinderhalteplatte (7) an dem Rahmen in einer Position, die im wesentlichen mit der Ebene des Rahmens ausgerichtet ist, versehen ist.

4. Anbringrahmen nach Anspruch 3,
dadurch **gekennzeichnet**, daß
die ersten und zweiten Befestigungseinrichtungen derart angeordnet sind, daß zwei Verbinderhalteplatten gleichzeitig an dem Rahmen (100) angebracht werden können.

5. Anbringrahmen nach einem der Ansprüche 1 bis 4,
dadurch **gekennzeichnet**, daß
der Rahmen (100) mit Befestigungseinrichtungen an seiner Rückseite zur Befestigung einer damit zusammenwirkenden, getrennten mechanischen und elektrischen Schutzabdeckung versehen ist.

6. Anbringrahmen nach einem der Ansprüche 1 bis 5,
dadurch **gekennzeichnet**, daß
der Rahmen (100) mit einem Halter für ein Etikett zur Anzeige des Verbinders versehen ist, der an der Verbinderhalteplatte des Rahmens angeordnet ist.

7. Anbringrahmen nach einem der Ansprüche 1 bis 6,
dadurch **gekennzeichnet**, daß
der Rahmen (100) mit Einrichtungen zur Befestigung einer damit zusammenwirkenden Abdeckung versehen ist.

8. Anbringrahmen nach Anspruch 7,
dadurch **gekennzeichnet**, daß
die Abdeckung mit einer Öffnung oder einem durchsichtigen Fenster zu dem Halter für das Etikett gegenüberliegend versehen ist.

## Revendications

1. Châssis de monture (100) destiné à être fixé dans une ouverture avant d'un fournisseur de services électrique (4) du type comportant une partie avant munie de rebords venant mutuellement l'un en face de l'autre de chaque côté de l'ouverture, ce châssis étant destiné à monter un bloc fonctionnel voulu sur ou dans le fournisseur de services,
caractérisé en ce que
- le châssis (100) présente une forme carrée, et
- chaque côté du châssis est muni d'un dispositif d'enclenchement se présentant sous la forme de moyens de guidage et d'espacement (1), et d'au moins un crochet (2) coopérant avec les rebords du fournisseur de services de façon qu'ils puissent être fixés dans l'ouverture avant dans au moins deux positions différant l'une de l'autre de 90° dans le sens de rotation, dans le plan du châssis.

2. Châssis de monture selon la revendication 1,
caractérisé en ce que
le châssis (100) est muni de premiers moyens de fixation pour fixer une plaque de porte-connecteur (7) sur le châssis, dans une position inclinée par rapport au plan de ce châssis.

3. Châssis de monture selon la revendication 2,
caractérisé en ce que
le châssis (100) est en outre muni de seconds moyens de fixation pour fixer une plaque de porte-connecteur (7) sur le châssis, dans une position essentiellement alignée avec le plan du châssis.

4. Châssis de monture selon la revendication 3,
caractérisé en ce que
les premier et second moyens de fixation sont disposés de façon que deux plaques de porte-connecteur puissent être montées en même temps sur le châssis (100).

5. Châssis de monture selon l'une quelconque des revendications 1 à 4,
caractérisé en ce que
le châssis (100) est muni, de son côté arrière, de moyens de fixation pour fixer un couvercle de protection mécanique et électrique coopérant de façon séparée.

6. Châssis de monture selon l'une quelconque des revendications 1 à 5,
caractérisé en ce que
le châssis (100) est muni d'un support pour une étiquette destinée à indiquer le connecteur disposé sur la plaque de porte-connecteur du châssis.

7. Châssis de monture selon l'une quelconque des revendications 1 à 6,
caractérisé en ce que
le châssis (100) est muni de moyens pour fixer un couvercle en coopération.

8. Châssis de monture selon la revendication 7,
caractérisé en ce que
le couvercle est muni d'une ouverture ou d'une fenêtre transparente opposée au support de l'étiquette.
